# FASCICULE DE BREVET EUROPEEN

(11) **EP 1 763 880 B1**
(45) Date de publication et mention de la délivrance du brevet: **10.09.2008**
(21) Numéro de dépôt: 05772934.5
(22) Date de dépôt: 17.05.2005
(51) Int. Cl.: G11B 7/26, B29C 43/02

(54) **PROCEDE DE REALISATION D"UN SUPPORT D"ENREGISTREMENT OPTIQUE A PLUSIEURS ETAGES ET SUPPORT OBTENU**
VERFAHREN ZUR HERSTELLUNG EINES MEHRSTUFIGEN OPTISCHEN AUFZEICHNUNGSMEDIUMS UND AUF DIESE WEISE HERGESTELLTES MEDIUM
METHOD FOR PRODUCING A MULTIPLE-STAGE OPTICAL RECORDING MEDIUM AND RESULTING MEDIUM

(30) Priorité: 10.06.2004 FR 0406305
(43) Date de publication de la demande: 21.03.2007
(73) Titulaire: COMMISSARIAT A L'ENERGIE ATOMIQUE, 75015 Paris (FR); MPO International, 53700 Averton (FR)
(72) Inventeur: RABY, Jacques, F-38000 Grenoble (FR); FARGEIX, Alain, F-38240 Meylan (FR); PLISSONNIER, Marc, F-38320 Eybens (FR); RUTY, Marine, F-38130 Echirolles (FR)
(74) Mandataire: Jouvray, Marie-Andrée
(86) Numéro de dépôt international: PCT/FR2005/001236
(87) Numéro de publication internationale: WO 2006/005827

(56) Documents cités:
- EP-A- 0 368 442
- WO-A-03/032306

## Description

### Domaine technique de l'invention

L'invention concerne un procédé de réalisation d'un support d'enregistrement comportant au moins des premier et second étages micro-structurés assemblés par une couche de colle et disposés entre des substrats inférieur et supérieur micro-structurés, procédé comportant, après dépôt, sur le premier étage, d'une couche polymérisable constituant la couche de colle,
- la pose provisoire d'une matrice micro-structurée, transparente à une lumière destinée à provoquer la polymérisation de la couche de colle, sur la couche de colle, de manière à micro-structurer la couche de colle,
- la polymérisation de la colle par insolation, à travers la matrice, avec une lumière de polymérisation,
- le retrait de la matrice,
- le dépôt du second étage sur la couche de colle micro-structurée.

### État de la technique

Les supports d'enregistrement optiques du type disque versatile numérique ( « Digital Versatile Disc : DVD » ) à deux étages peuvent stocker 8,5Gbyte d'informations. Ces supports sont constitués par un empilement de couches disposé typiquement entre deux substrats.

Les documents US2003/0179693 et US6599385 décrivent un support d'enregistrement comportant des premier et second étages micro-structurés assemblés par une couche de colle et disposés sur un substrat inférieur micro-structuré. Chacun des étages comporte plusieurs couches, notamment une couche active de mémoire. La structuration des différentes couches est réalisée à l'aide d'une matrice pouvant être en métal ou en polymère. Puis l'empilement se termine par un substrat supérieur identique ou non au substrat inférieur.

Dans le document EP-A-0368442, un support d'enregistrement d'information optique ayant plusieurs interfaces réflectives est réalisé par les étapes successives suivantes :
- formation d'une première couche réflective sur une surface microstructurée d'un substrat,
- mise en place et pressage d'un substrat d'estampage transparent et comportant une face microstructurée contre la première couche réflective par l'intermédiaire d'une couche en résine,
- durcissement de la couche en résine par insolation à travers le substrat d'estampage qui est ensuite retiré,
- dépôt d'une seconde couche réflective sur la couche en résine
- et formation d'une couche de protection sur la seconde couche réflective, la couche de protection pouvant être constituée par une résine durcissant par insolation.

### Objet de l'invention

L'invention a pour but de remédier à ces inconvénients et, en particulier, de proposer un procédé de réalisation d'un support d'enregistrement à faibles coûts.

Selon l'invention, ce but est atteint par les revendications annexées et, plus particulièrement, par le fait que le procédé comporte :
- le dépôt d'une couche de colle supplémentaire sur le second étage,
- la pose définitive de la matrice micro-structurée sur la couche de colle supplémentaire, de manière à constituer le substrat supérieur.

L'invention a également pour but un support d'enregistrement fabriqué par le procédé selon l'invention et comportant successivement :
- le substrat inférieur micro-structuré,
- le premier étage micro-structuré,
- la couche de colle,
- le second étage micro-structuré,
- la couche de colle supplémentaire et
- le substrat supérieur micro-structuré.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

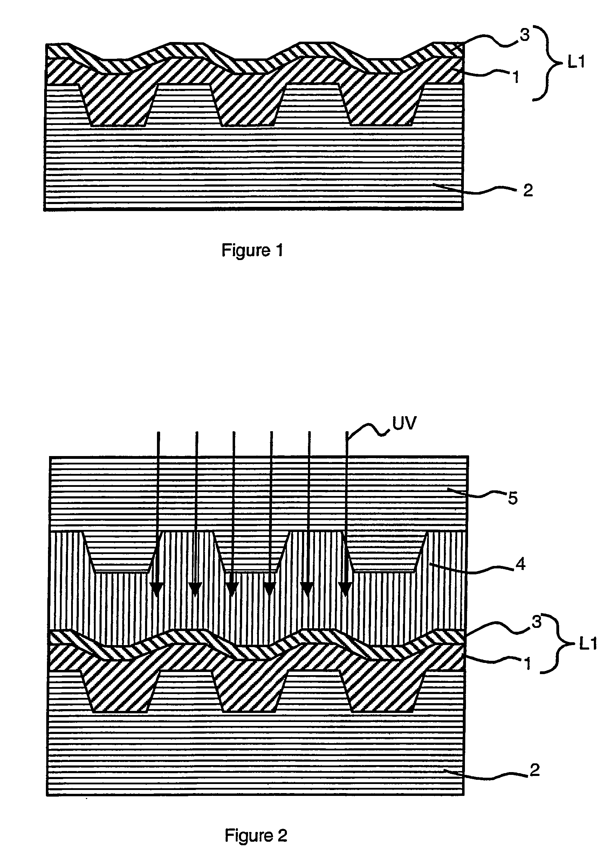

Les figures 1 à 5 représentent différentes étapes d'un mode de réalisation particulier d'un procédé de réalisation d'un support d'enregistrement selon l'invention, ayant deux étages.

### Description de modes particuliers de réalisation

Sur la figure 1, une première couche active 1 est déposée sur une face avant d'un substrat 2 micro-structuré par un motif prédéterminé. La couche active 1 est constituée par un matériau mémoire apte à subir des transformations au cours d'une phase d'écriture du support d'enregistrement optique. Le substrat 2 a typiquement une épaisseur de l'ordre de 0,6mm et peut être fabriqué par thermo-injection d'un matériau polymère dans un moule en nickel structuré, obtenu par voie électrochimique. La première couche active 1 peut être constituée par un matériau organique, par exemple par un colorant. Dans le mode de réalisation particulier représenté aux figures, un premier film semi-réfléchissant 3 est déposé sur la face avant de la première couche active 1. La première couche active 1 et le premier film semi-réfléchissant 3 constituent un premier niveau ou étage L1 d'enregistrement du support d'enregistrement.

Comme représenté à la figure 2, sur le premier film semi-réfléchissant 3 est déposée une couche de matériau polymérisable constituant une couche de colle 4, par exemple en résine photo-polymérisable. La couche de colle 4 du support d'enregistrement doit être transparente, afin de transmettre la lumière lors de phases de lecture et/ou d'écriture d'informations. La couche de colle 4 peut être réalisée par dépôt d'un cordon de résine, sur le film semi-réfléchissant 3, suivi d'une mise à épaisseur de la résine par force centrifuge sur une tournette. Puis, une matrice 5, micro-structurée par un motif, éventuellement identique au motif du substrat 2, est posée provisoirement sur la couche de colle 4 et pressée contre la couche 4 pour transférer son motif à la couche 4 de colle. La matrice 5 et le substrat inférieur 2 sont, de préférence, réalisés dans un même matériau.

Ensuite, la polymérisation de la colle 4 est provoquée par insolation, à travers la matrice 5, avec une lumière de polymérisation, par exemple de la lumière ultraviolette UV représentée par des flèches parallèles sur la figure 2. La réalisation de la couche de colle 4 micro-structurée peut être effectuée à pression atmosphérique et à température ambiante.

La matrice 5 doit être transparente à la lumière UV destinée à provoquer la polymérisation de la couche de colle 4. La matrice 5 peut être fabriquée préalablement par thermo-injection d'un matériau polymère dans un moule. L'épaisseur de la matrice 5 est, de préférence, égale a l'épaisseur du substrat 2, par exemple de l'ordre de 0,6mm.

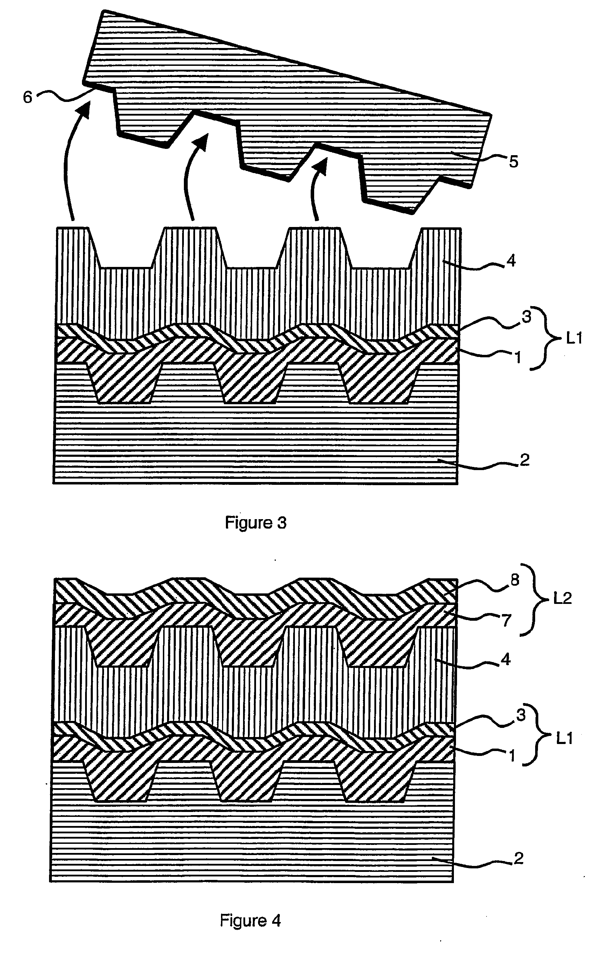

Après la polymérisation, la matrice 5 est retirée, comme illustré à la figure 3. La couche de colle 4 étant polymérisée, elle garde la forme micro-structurée définie par la matrice 5. Afin de faciliter la séparation de la matrice 5 de la couche de colle 4, le procédé peut comporter, avant la pose de la matrice 5, un traitement de surface de la matrice 5 micro-structurée. Le traitement de surface permet de rendre antiadhésive au moins une partie de la surface de la matrice micro-structurée, notamment la partie qui est destinée à venir en contact avec la couche de colle 4, par exemple une face micro-structurée de la matrice 5.

La matrice 5 peut être traitée, par exemple par plasma, en vue d'obtenir un dépôt d'un film mince 6 en matériau antiadhésif, par exemple hydrophobe. Le matériau antiadhésif peut présenter une faible énergie de surface ou une faible tension de surface. Le dépôt du film mince 6 antiadhésif peut être effectué à température ambiante, par exemple par voie chimique en phase vapeur assisté par plasma (« plasma enhanced chemical vapor deposition : PECVD »). Le traitement par plasma permet de créer des groupements chimiques fonctionnels apolaires en surface du matériau de la matrice 5 qui diminuent la mouillabilité de la surface. Le plasma peut comporter des composés à base de silicium, d'oxygène et de carbone (SiOC). Un film mince 6 en matériau polymère dense peut être déposé par polymérisation plasma. L'utilisation de monomères organosiloxanes ou fluorés, par exemple du C₄F₈ ou du SF₆, permet d'obtenir un film à très faible énergie de surface, ayant par exemple une épaisseur comprise entre 5nm et 30nm et pouvant être déposé avec une vitesse de dépôt de l'ordre de 5nm/s. Le procédé peut également comporter une étape d'activation de surface de la couche de colle 4 microstructurée, par exemple par plasma oxydant sous vide ou par irradiation par lumière ultraviolette et sous ozone à la pression atmosphérique.

En effet, des mesures d'angle de contact réalisées sur un substrat en polycarbonate, ayant subi un traitement par plasma comportant des oxydes de silicium et/ou des composés à base de carbone et de fluor, ont montré une diminution de la mouillabilité du substrat par des liquides polaires comme certaines résines polymérisables qui peuvent être utilisées pour la couche de colle 4.

Outre l'objectif de faciliter la séparation de la matrice 5 de la couche de colle 4, le dépôt d'un film mince 6 antiadhésif doit permettre le transfert du motif micro-structuré de la matrice 5 à la couche de colle 4. En effet, des mesures au microscope à force atomique montrent que le motif est conservé, après dépôt d'un film mince de 30nm d'épaisseur en matériau antiadhésif.

Le procédé peut comporter, après le retrait de la matrice 5, une étape de neutralisation du traitement de surface ce qui permet de réutiliser la matrice 5 ultérieurement, notamment pour fixer la matrice sur une autre couche de colle comme décrit ci-dessous. La neutralisation peut, par exemple, être effectuée par l'intermédiaire d'un plasma oxydant sous vide ou d'une irradiation par lumière ultraviolette sous ozone ou créant de l'ozone, avantageusement sous atmosphère ambiante, permettant de rendre hydrophile une surface hydrophobe et, ainsi, d'assurer un collage définitif de la matrice.

Comme représenté à la figure 4, un second étage L2 d'enregistrement est ensuite déposé sur la couche de colle 4 micro-structurée. La couche de colle 4 permet ainsi d'assembler les premier L1 et second L2 étages d'enregistrement. Dans le mode de réalisation particulier représenté à la figure 4, le second étage L2 est constitué par une seconde couche active 7, ayant par exemple les mêmes propriétés que la première couche active, et par un second film semi-réfléchissant 8, typiquement plus épais que le premier film semi-réfléchissant 3.

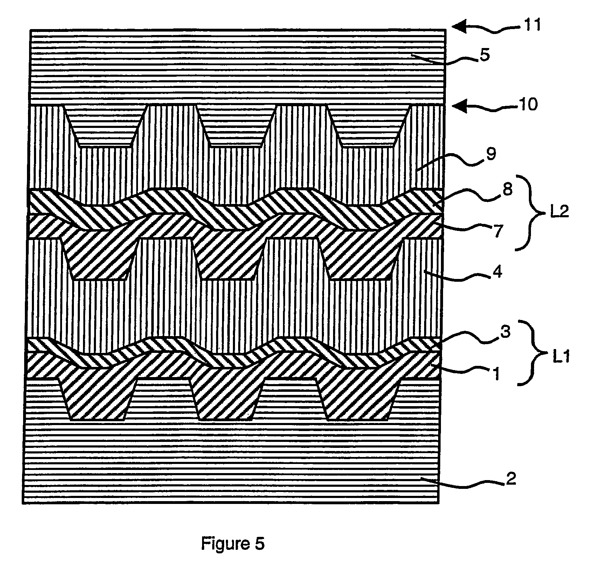

Comme représenté à la figure 5, sur le second film semi-réfléchissant 8 est déposée une couche de colle supplémentaire 9. Puis, la matrice 5 est posée sur la couche de colle supplémentaire 9 et pressée contre la couche de colle supplémentaire 9 pour fixer définitivement, par insolation ultraviolette, la matrice 5 sur la couche de colle supplémentaire 9. Ainsi, la matrice 5 constitue un substrat supérieur ayant une fonction de protection du support d'enregistrement.

Sur la figure 5, la matrice 5 comporte une face micro-structurée 10 et une face opposée plane 11. La pose définitive de la matrice 5 peut être effectuée par mise en contact de la face plane 11 avec la couche de colle supplémentaire 9, en particulier dans le cas où la face micro-structurée 10 comporte un revêtement ou un film 6 antiadhésif empêchant éventuellement la pose définitive de la matrice 5 sur la couche de colle supplémentaire 9. Sur la figure 5, la face micro-structurée 10 ne comporte plus de film antiadhésif et la pose définitive de la matrice 5 est effectuée par mise en contact de la face micro-structurée 10 avec la couche de colle supplémentaire 9, suivie d'une polymérisation par insolation par lumière ultraviolette.

L'utilisation de la matrice 5 en tant que substrat supérieur permet d'éviter des pertes de matériaux. En effet, la matrice 5 ne pourrait être utilisé qu'un nombre restreint de fois pour des étapes de polymérisation sous insolation. Dans le cas du procédé selon l'invention, une nouvelle matrice est utilisée pour chaque support d'enregistrement.

La matrice 5 est, de préférence, constituée par le même matériau que le substrat 2. Ainsi, la matrice 5 et le substrat 2 sont, de préférence, à base de matériaux en polymère thermoplastique et, plus particulièrement, constitués de poly-carbonate, de poly-méthylmétacrylate (PMMA) ou de copolymères et de polymères à base de cyclo-oléfines. La fabrication de la matrice 5 est, de préférence, strictement identique à la fabrication du substrat 2 pour pouvoir utiliser une même chaîne d'équipements.

L'invention n'est pas limitée aux modes de réalisation représentés. En particulier, le support peut comporter trois étages ou plus (L3, L4, etc...). Ainsi, de manière analogue au procédé précédent, le procédé comporte, avant la pose définitive de la matrice 5 micro-structurée, la pose provisoire de la matrice 5 micro-structurée sur la couche de colle supplémentaire 9, de manière à micro-structurer la couche de colle supplémentaire 9, qui est déposée sur l'étage précédent et qui doit, dans ce cas, être polymérisable. Puis, la colle 9 est polymérisée par insolation, à travers la matrice 5, avec une lumière UV de polymérisation et la matrice 5 est retirée. Ensuite, un étage supplémentaire (L3) est déposé sur la couche de colle 9 micro-structurée et une couche de colle supplémentaire 9 finale est déposée sur l'étage supplémentaire (L3) et la matrice 5 micro-structurée est posée définitivement.

## Revendications

1. Procédé de réalisation d'un support d'enregistrement comportant au moins des premier (L1) et second (L2) étages micro-structurés assemblés par une couche de colle (4) et disposés entre des substrats inférieur (2) et supérieur micro-structurés, procédé comportant, après dépôt, sur le premier étage (L1), d'une couche polymérisable constituant la couche de colle (4),
- la pose provisoire d'une matrice (5) micro-structurée, transparente à une lumière (UV) destinée à provoquer la polymérisation de la couche de colle (4), sur la couche de colle (4), de manière à micro-structurer la couche de colle (4),
- la polymérisation de la colle (4) par insolation, à travers la matrice (5), avec une lumière (UV) de polymérisation,
- le retrait de la matrice (5),
- le dépôt du second étage (L2) sur la couche de colle (4) micro-structurée,
procédé **caractérisé en ce qu'**il comporte
- le dépôt d'une couche de colle supplémentaire (9) sur le second étage (L2),
- la pose définitive de la matrice (5) micro-structurée sur la couche de colle (9) supplémentaire, de manière à constituer le substrat supérieur.

2. Procédé selon la revendication 1, **caractérisé en ce que** la matrice (5) et le substrat inférieur (2) sont réalisés dans un même matériau.

3. Procédé selon l'une des revendications 1 et 2, **caractérisé en ce qu'**il comporte, avant la pose définitive de la matrice (5) micro-structurée,
- la pose provisoire de la matrice (5) micro-structurée, sur la couche de colle supplémentaire (9), polymérisable, déposée sur l'étage précédent, de manière à micro-structurer la couche de colle supplémentaire (9),
- la polymérisation de la colle (9) par insolation, à travers la matrice (5), avec une lumière (UV) de polymérisation,
- le retrait de la matrice (5),
- le dépôt d'un étage supplémentaire (L3) sur la couche de colle (9) micro-structurée,
- le dépôt d'une couche de colle supplémentaire (9) sur l'étage supplémentaire (L3).

4. Procédé selon l'une quelconque des revendications 1 à 3, **caractérisé en ce que** la matrice (5) comporte une face micro-structurée (10) et une face plane (11) opposée.

5. Procédé selon la revendication 4, **caractérisé en ce que** la pose définitive de la matrice (5) est effectuée par mise en contact de la face plane (11) avec la couche de colle supplémentaire (9).

6. Procédé selon la revendication 4, **caractérisé en ce que** la pose définitive de la matrice (5) est effectuée par mise en contact de la face micro-structurée (10) avec la couche de colle supplémentaire (9).

7. Procédé selon l'une quelconque des revendications 1 à 6, **caractérisé en ce qu'**il comporte un traitement de surface de la matrice (5) micro-structurée, permettant de rendre antiadhésive au moins une partie de la surface micro-structurée de la matrice (5).

8. Procédé selon la revendication 7, **caractérisé en ce que** le traitement de surface comporte le dépôt d'un film mince (6) antiadhésif.

9. Procédé selon l'une des revendications 7 et 8, **caractérisé en ce que** le traitement de surface permet de rendre hydrophobe la surface.

10. Procédé selon l'une quelconque des revendications 7 à 9, **caractérisé en ce qu'**il comporte, après le retrait de la matrice (5), une étape de neutralisation du traitement de surface.

11. Procédé selon la revendication 10, **caractérisé en ce que** la neutralisation est effectuée par l'intermédiaire d'un moyen choisi parmi les plasmas oxydants sous vide et les irradiations par lumière ultraviolette sous ozone à la pression atmosphérique.

12. Procédé selon l'une quelconque des revendications 1 à 11, **caractérisé en ce qu'**il comporte une étape d'activation de surface de la couche de colle 4 microstructurée, effectuée par l'intermédiaire d'un moyen choisi parmi les plasmas oxydants sous vide et les irradiations par lumière ultraviolette sous ozone à la pression atmosphérique.

## Claims

1. Process for producing a recording medium comprising at least a first (L1) and a second (L2) micro-patterned stages assembled by an adhesive layer (4) and arranged between micro-patterned bottom (2) and top substrates, process comprising, after deposition on the first stage (L1) of a polymerizable layer forming the adhesive layer (4),
- provisional placing on the adhesive layer (4) of a micro-patterned matrix (5), transparent to a light (UV) designed to perform polymerization of the adhesive layer (4), so as to micro-pattern the adhesive layer (4),
- polymerization of the adhesive (4) by exposure, through the matrix (5), with a polymerization light (UV),
- removal of the matrix (5),
- deposition of the second stage (L2) on the micro-patterned adhesive layer (4),
process **characterized in that** it comprises
- deposition of an additional adhesive layer (9) on the second stage (L2),
- final placing of the micro-patterned matrix (5) on the additional adhesive layer (9) so as to form the top substrate.

2. Process according to claim 1, **characterized in that** the matrix (5) and the bottom substrate (2) are made of the same material.

3. Process according to one of the claims 1 and 2, **characterized in that** it comprises, before final placing of the micro-patterned matrix (5),
- provisional placing of the micro-patterned matrix (5) on the polymerizable additional adhesive layer (9) deposited on the previous stage so as to micro-pattern the additional adhesive layer (9),
- polymerization of the adhesive (9) by exposure, through the matrix (5), with a polymerization light (UV),
- removal of the matrix (5),
- deposition of an additional stage (L3) on the micro-patterned adhesive layer (9),
- deposition of an additional adhesive layer (9) on the additional stage (L3).

4. Process according to any one of the claims 1 to 3, **characterized in that** the matrix (5) comprises a micro-patterned face (10) and an opposite flat face (11).

5. Process according to claim 4, **characterized in that** final placing of the matrix (5) is performed by bringing the flat face (11) into contact with the additional adhesive layer (9).

6. Process according to claim 4, **characterized in that** final placing of the matrix (5) is performed by bringing the micro-patterned face (10) into contact with the additional adhesive layer (9).

7. Process according to any one of the claims 1 to 6, **characterized in that** it comprises surface treatment of the micro-patterned matrix (5) enabling at least a part of the surface of the micro-patterned matrix (5) to be made anti-adhesive.

8. Process according to claim 7, **characterized in that** the surface treatment comprises deposition of an anti-adhesive thin film (6).

9. Process according to one of the claims 7 and 8, **characterized in that** the surface treatment enables the surface to be made hydrophobic.

10. Process according to any one of the claims 7 to 9, **characterized in that** it comprises a neutralization step of the surface treatment after removal of the matrix (5).

11. Process according to claim 10, **characterized in that** neutralization is performed by a means chosen from among oxidizing plasmas in a vacuum and irradiations by ultraviolet light in ozone at atmospheric pressure.

12. Process according to any one of the claims 1 to 11, **characterized in that** it comprises a surface activation step of the micro-patterned adhesive layer (4), performed by a means chosen from among oxidizing plasmas in a vacuum and irradiations by ultraviolet light in ozone at atmospheric pressure.

## Patentansprüche

1. Verfahren zur Herstellung eines Aufzeichnungsträgers, der mindestens eine erste (L1) und eine zweite (L2) mikrostrukturierte Stufe aufweist, die mittels einer Kleberschicht (4) miteinander verbunden und zwischen einem mikrostrukturierten, unteren Substrat (2) und einem mikrostrukturierten, oberen Substrat angeordnet sind, Verfahren, das nach dem Aufbringen einer die Kleberschicht (4) bildenden polymerisierbaren Schicht auf die erste Stufe folgende Schritte umfasst :
- provisorisches Aufbringen einer (5) mikrostrukturierten Matrix, die transparent für ein Licht (UV) ist, das die Polymerisation der Kleberschicht (4) bewirken soll, auf die Kleberschicht (4), um die Kleberschicht (4) zu mikrostrukturieren,
- Polymerisation des Klebers (4) durch Belichtung mit einem Polymerisationslicht (UV) durch die Matrix (5) hindurch,
- Ablösen der Matrix (5),
- Aufbringen der zweiten Stufe (L2) auf die mikrostrukturierte Kleberschicht (4), Verfahren, das **dadurch gekennzeichnet ist, dass** es umfasst :
- Aufbringen einer zusätzlich Kleberschicht (9) auf die zweite Stufe (L2),
- endgültiges Aufbringen der mikrostrukturierten Matrix (5) auf die zusätzliche Kleberschicht (9), um das obere Substrat zu bilden.

2. Verfahren nach Anspruch 1, **dadurch gekennzeichnet, dass** die Matrix (5) und das untere Substrat (2) aus dem gleichen Material bestehen.

3. Verfahren nach einem der Ansprüche 1 und 2, **dadurch gekennzeichnet, dass** es nach dem endgültigen Aufbringen der mikrostrukturierten Matrix (5) umfasst:
- provisorisches Aufbringen der mikrostrukturierten Matrix (5) auf die zusätzliche, polymerisierbare Kleberschicht (9), die auf die vorhergehende Stufe aufgebracht wurde, um die zusätzliche Kleberschicht (9) zu mikrostrukturieren,
- Polymerisation des Klebers (9) durch Belichtung mit einem Polymerisationslicht (UV) durch die Matrix (5) hindurch,
- Ablösen der Matrix (5),
- Aufbringen einer zusätzlichen Stufe (L3) auf die mikrostrukturierte Kleberschicht (9),
- Aufbringen einer zusätzlichen Kleberschicht (9) auf die zusätzliche Stufe (L3).

4. Verfahren nach einem der Ansprüche 1 bis 3, **dadurch gekennzeichnet, dass** die Matrix (5) eine mikrostrukturierte Seite (10) und eine ebene, entgegengesetzte Seite (11) umfasst.

5. Verfahren nach Anspruch 4, **dadurch gekennzeichnet, dass** das endgültige Aufbringen der Matrix (5) **dadurch** geschieht, dass die ebene Seite (11) mit der zusätzlichen Kleberschicht (9) in Kontakt gebracht wird.

6. Verfahren nach Anspruch 4, **dadurch gekennzeichnet, dass** das endgültige Aufbringen der Matrix (5) **dadurch** geschieht, dass die mikrostrukturierte Seite (10) mit der zusätzlichen Kleberschicht (9) in Kontakt gebracht wird.

7. Verfahren nach einem der Ansprüche 1 bis 6, **dadurch gekennzeichnet, dass** es eine Oberflächenbehandlung der mikrostrukturierten Matrix (5) umfasst, die es ermöglicht, zumindest einen Teil der mikrostrukturierten Oberfläche der Matrix (5) antiadhäsiv zu machen.

8. Verfahren nach Anspruch 7, **dadurch gekennzeichnet, dass** die Oberflächenbehandlung das Aufbringen einer antiadhäsiven Dünnschicht (6) umfasst.

9. Verfahren nach einem der Ansprüche 7 und 8, **dadurch gekennzeichnet, dass** die Oberflächenbehandlung es ermöglicht, die Oberfläche hydrophob zu machen.

10. Verfahren nach einem der Ansprüche 7 bis 9, **dadurch gekennzeichnet, dass** es nach Ablösen der Matrix (5) einen Neutralisationsschritt der Oberflächenbehandlung umfasst.

11. Verfahren nach Anspruch 10, **dadurch gekennzeichnet, dass** die Neutralisation mit einem Mittel erfolgt, das aus den unter Vakuum oxidierenden Plasmas bzw. den Bestrahlungen mit UV-Licht unter Ozon bei atmosphärischem Druck ausgewählt ist.

12. Verfahren nach einem der Ansprüche 1 bis 11, **dadurch gekennzeichnet, dass** es einen Aktivierungsschritt der Oberfläche der mikrostrukturierten Kleberschicht 4 umfasst, der mit einem Mittel erfolgt, das aus den unter Vakuum oxidierenden Plasmas bzw. den Bestrahlungen mit UV-Licht unter Ozon bei atmosphärischem Druck ausgewählt ist.
